## Europäisches Patentamt
## European Patent Office
## Office européen des brevets

(19)

(11) Veröffentlichungsnummer: **0 191 937**
**B1**

(12) # EUROPÄISCHE PATENTSCHRIFT

(45) Veröffentlichungstag der Patentschrift:
13.09.89

(51) Int. Cl.⁴: **G06F 1/00**, G08B 26/00

(21) Anmeldenummer: 85116111.7

(22) Anmeldetag: 17.12.85

(54) Dezentrales Überwachungssystem der Lüftung in einer Datenverarbeitungsanlage.

(30) Priorität: 19.12.84 DE 3446382

(43) Veröffentlichungstag der Anmeldung:
27.08.86 Patentblatt 86/35

(45) Bekanntmachung des Hinweises auf die Patenterteilung:
13.09.89 Patentblatt 89/37

(84) Benannte Vertragsstaaten:
AT BE CH DE FR GB IT LI NL SE

(56) Entgegenhaltungen:
DE-A- 3 128 811
US-A- 4 119 815

IBM TECHNICAL DISCLOSURE BULLETIN, Band 27,
Nr. 5, Oktober 1984, Seiten 2849-2850, New York, US; F.
DE MARA et al.: "Computer power control using a
single-chip microcomputer"
ERICSSON REVIEW, Band 60, Nr. 2, 1983,
Seiten 102,108, Stockholm, SE; B. ANDERSSON et al.:
"Alarmcom HAZ 11103, a security and supervision
system"
ICL TECHNICAL JOURNAL, Nr. 1, 4. Mai 1984,
Seiten 13-32, London, GB; T.L. FAULKNER et al.: "The
Atlas 10 computer"

(73) Patentinhaber: Siemens Aktiengesellschaft,
Wittelsbacherplatz 2, D-8000 München 2(DE)

(72) Erfinder: Haas, Hans, Dipl.-Phys., Seeschneidfeld 1,
D-8018 Grafing(DE)

ACTORUM AG

**Beschreibung**

Die Erfindung betrifft eine Datenverarbeitungsanlage entsprechend dem Oberbegriff des Patentanspruches 1.

Das einwandfreie Arbeiten des Stromversorgungssystems einer Datenverarbeitungsanlage ist unerläßliche Voraussetzung für das einwandfreie Arbeiten der Datenverarbeitungsanlage selbst. Neben Einrichtungen zur Überwachung der Netzversorgung und der benötigten Stromversorgungseinheiten sind wegen der unvermeidlichen Wärmeentwicklung auch Kühleinrichtungen, zum Beispiel in Form von Lüftern vorgesehen, die für die Einhaltung der erforderlichen Betriebstemperaturen sorgen. Diese Lüftervorrichtungen sind ebenfalls mit Überwachungseinrichtungen gekoppelt, die einen Fehler anzeigen, wenn der Lüfter nicht mehr einwandfrei arbeitet oder die Betriebstemperatur unzulässige Werte erreicht. Alle Fehler werden meistens einer zentralen Serviceeinrichtung der Datenverarbeitungsanlage, zum Beispiel einem Service-Prozessor, gemeldet, der dann die notwendigen Maßnahmen veranlaßt, zum Beispiel das Außerbetriebsetzen der gestörten Einrichtungen gegebenenfalls mit entsprechender Umschaltung auf Ersatzeinheiten, und das Wartungspersonal informiert.

Die bei herkömmlichen Datenverarbeitungsanlagen getroffenen Überwachungsmaßnahmen beschränken sich in der Regel nur auf globale Fehlermeldungen an die zentrale Serviceeinrichtung, so daß zusätzlich das Wartungspersonal eingreifen muß, um lediglich durch lokale Fehleranzeigen gekennzeichnete fehlerhafte Einrichtungen zu ermitteln oder um eine Fehleranzeige zurückzusetzen.

So werden zum Beispiel gemäß der SiemensDruckschrift U 64 048-J, Kapitel 3, Abschnitt 1 "Fehlersuche im SV-System" für die Lüfter- und Temperaturüberwachung Überwachungsschleifen verwendet - man siehe Abb. I.3.1-2, wobei die individuellen Fehleranzeigen nur durch individuelle Tasten an jedem Lüftermodul zurückgesetzt werden können. Die globale Fehleranzeige ermöglicht dem System auch keine gezielte Reaktion ohne Mithilfe des Wartungspersonals, so daß zur Sicherheit der Datenverarbeitungsanlage bei nicht rechtzeitigem Eingreifen die Stromversorgung für die gesamte Datenverarbeitungsanlage abgeschaltet werden muß.

Es ist daher Aufgabe der Erfindung, die Überwachung der Lüftervorrichtungen in das Servicesystem der Datenverarbeitungsanlage so zu integrieren, daß ohne ins Gewicht fallenden Zusatzaufwand die Reaktionsmöglichkeiten der Serviceeinrichtung unabhängig von der Unterstützung durch das Wartungspersonal erweitert und die Ausfallzeiten der Datenverarbeitungsanlage verringert werden.

Diese Aufgabe wird gemäß der Erfindung durch die Merkmale des Patentanspruches 1 gelöst.

Danach wird die Überwachung der einzelnen Lüftervorrichtungen einer übergeordneten eigenständigen Meldesteuereinrichtung übertragen, die wie andere Einrichtungen unmittelbar an die vorhandene Anschlußstelle für die Serviceeinrichtung ange

schlossen ist und mit den einzelnen Überwachungseinrichtungen der Lüftervorrichtungen mit individuell auswählbaren Melde- und Steuerleitungen in Verbindung steht. Die Serviceeinrichtung ist dadurch in der Lage, den Fehlerzustand jeder Lüftervorrichtung gezielt abzufragen und Fehleranzeigen nach entsprechender Reaktion zurückzusetzen, ohne daß gegebenenfalls das Wartungspersonal eingreifen muß. Lediglich bei nicht rechtzeitiger Reaktion, was durch eine Zeitüberwachungsschaltung gesteuert wird, kommt es zu einer Netzabschaltung für den zugehörigen Anlagenteil. Der Aufwand für eine derartige zentrale Meldesteuereinrichtung ist denkbar gering.

Weitere Vorteile ergeben sich, wenn gemäß einer Weiterbildung entsprechend Patentanspruch 2 mit den Steuerleitungen für die Lüftervorrichtungen zum Zurücksetzen der Fehleranzeigen auch Netzrelais gekoppelt sind, über die die Lüftervorrichtungen in Betrieb setzbar sind, wenn die zugehörige Fehleranzeige nicht wirksam ist, oder wenn entsprechend Anspruch 3 wenigstens auch die Netzstromversorgung für den überwachten Anlagenteil über die Meldesteuereinrichtung durch die Serviceeinrichtung unmittelbar ein- und ausschaltbar ist, wobei durch zusätzliche Maßnahmen entsprechend den Patentansprüchen 4 und 5 die Steuerung der Stromversorgung sichergestellt und den verschiedenen Betriebsbedingungen angepaßt wird. Damit ist es möglich, nicht nur Fehler zu registrieren und darauf zu reagieren, sondern die vorhandenen Einrichtungen können auch zu einem gezielten Einschalten der Stromversorgung für die angeschlossenen Einrichtungen bei Inbetriebnahme der Datenverarbeitungsanlage ausgenutzt werden.

Auch besteht gemäß einer anderen Weiterbildung der Erfindung entsprechend Patentanspruch 6 die Möglichkeit, bei Verwendung mehrerer getrennter Meldesteuereinrichtungen das von der Zeitüberwachungsschaltung einer Meldesteuereinrichtung ausgelöste Abschaltesignal für die zugehörige Stromversorgung auch an die anderen Meldesteuereinrichtungen zu übertragen, ohne daß die Serviceeinrichtung eingreifen muß.

Einzelheiten der Erfindung seien nachfolgend anhand eines in der Zeichnung dargestellten Ausführungsbeispieles näher erläutert. Im einzelnen zeigen

FIG 1 ein Übersichtsschaltbild und
FIG 2 ein Blockschaltbild einer Meldesteuereinrichtung gemäß der Erfindung.

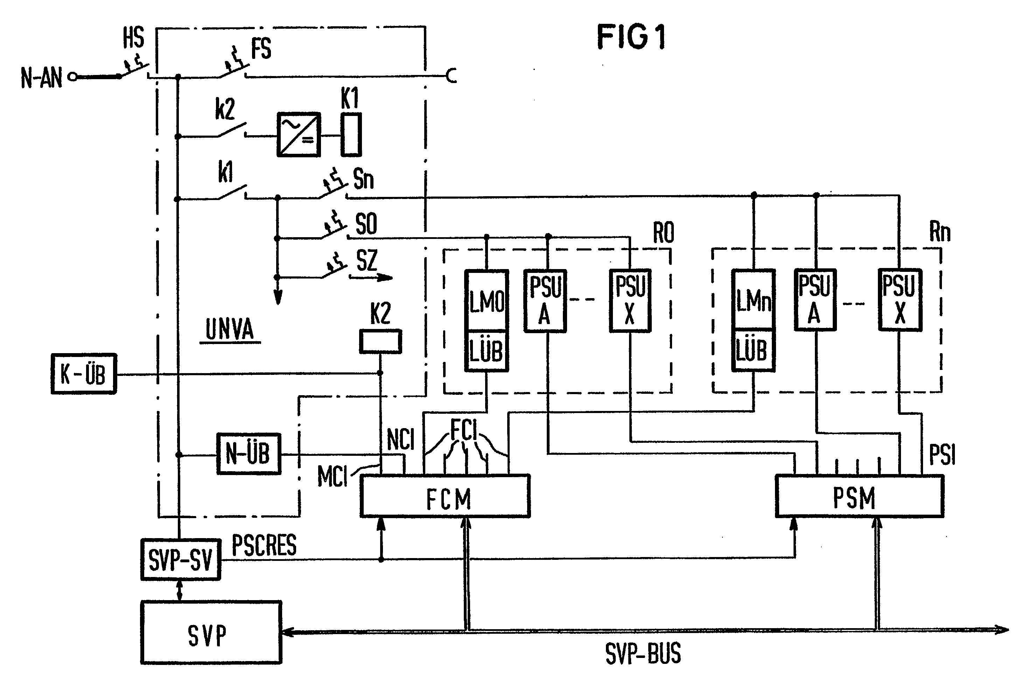

FIG 1 zeigt die Baueinheiten R0 bis Rn einer Datenverarbeitungsanlage mit dem zugehörigen Unternetzverteiler UNVA zur Netzstromversorgung. Von den einzelnen Baueinheiten R0 bis Rn sind lediglich die verschiedenen Stromversorgungseinheiten PSUA bis PSUX und die Lüftervorrichtungen LM ... mit der zugehörigen Überwachungseinrichtung LÜB gezeigt, die über den Unternetzverteiler UNVA an das Netz N–AN anschließbar sind.

Neben der zentralen Steuereinrichtung PSM für die Überwachung und Einstellung der einzelnen Stromversorgungseinheiten PSU... über die Schnittstellen PSI ist gemäß der Erfindung eine wei

tere Steuereinrichtung als Meldesteuereinrichtung FCM an das als Anschlußschnittstelle dienende Leitungssystem SVP–BUS des Service-Prozessors SVP angeschlossen, der von einer eigenen Stromversorgungseinheit SVP-SV gespeist wird. Diese Meldesteuerenrichtung FCM hat über die Schnittstellen FCI Zugriff zu den einzelnen Überwachungseinrichtungen LÜB der Lüftervorrichtungen LM... . Außerdem ist eine Schnittstelle NCI für den Anschluß der Netzüberwachung N–ÜB und eine Schnittstelle MCI für die Ansteuerung des Schützes K2 im Unternetzverteiler UNVA vorgesehen. Die Speisung beider Steuereinrichtungen PSM und FCM erfolgt durch die Stromversorgungseinheit SVP-SV.

Die Schnittstellen PSI der Steuereinrichtung PSM und deren Arbeitsweise entspricht beispielsweise der von Kapitel 3 der "Beschreibung der PSC-Funktionen und Hardware" der Siemens Druckschrift U 64050 J in Verbindung mit der Siemens-Druckschrift U 68001-J, Abschn. 5. Danach ist es möglich, die einzelnen Stromversorgungseinheiten PSU... vom Service-Prozessor SVP aus gezielt ein- oder auszuschalten oder auf vorgegebene Abweichungen von der Netzspannung einzustellen und Meldungen von den einzelnen Stromversorgungseinheiten bei vorgegebenen Abweichungen von der Netzspannung an den Serviceprozessor SVP weiterzuleiten. Hierauf sei jedoch nicht näher eingegangen, da dies für die Erfindung unerheblich ist.

Der Anschluß an das Netz N–AN erfolgt durch einen Sicherungshauptschalter HS. Dadurch wird zunächst die Stromversorgung des Serviceprozessors SVP über die Stromversorgungseinheit SVP-SV sichergestellt, damit die übrige Anlage in Betrieb gesetzt werden kann. Dies erfolgt durch Einschalten des Schützes K2 im Unternetzverteiler UNVA über die Schnittstelle MCI der Meldesteuereinrichtung FCM. Mit den Schaltkontakten k2 wird dann das Schütz K1 wirksam geschaltet, das mit seinen Kontakten k1 die Stromversorgungseinheiten PSU... und die Lüftermodule der einzelnen Baueinheiten R0 bis Rn über getrennte Sicherungsschalter S0 bis Sn an das Netz anschließt. Die Stromversorgungseinheiten PSU können danach einzeln nacheinander über die Steuereinheit PSM wirksam geschaltet werden.

Durch die Netzüberwachung N–ÜB im Unternetzverteiler UNVA erkannte Unregelmäßigkeiten werden über die Schnittstelle NCI der Meldesteuerrichtung FCM erkannt. Ebenso kann an die Schnittstelle MCI noch eine Meldeleitung für eine Klimaüberwachung K–ÜB angeschlossen sein.

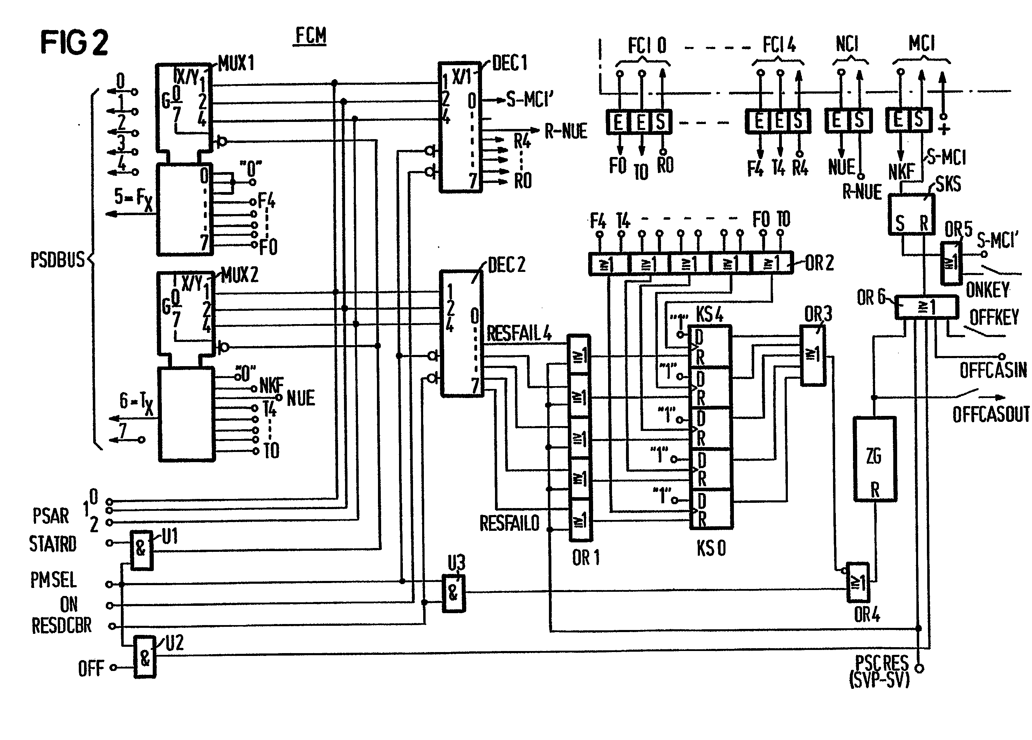

FIG 2 zeigt das Blockschaltbild der neuen Meldesteuereinrichtung FCM, wobei im linken Teil der Figur die Anschlußleitungen der Anschlußschnittstelle zum Serviceprozessor SVP und im rechten oberen Teil die Melde- und Steuerleitungen der Schnittstellen FCI0 bis FCI4, NCI und MCI gezeigt sind.

Jede Schnittstelle FCI... für die Lüftervorrichtungen LM/LÜB weist zwei Meldeleitungen, nämlich F... zur Kennzeichnung eines Lüfterfehlers und T... zur Kennzeichnung eines Temperaturfehlers, sowie eine Steuerleitung R... zum Wirksamschalten der zugehörigen Stromversorgung und zum Zurücksetzen einer gegebenenfalls wirksam gewordenen Fehleranzeige in der Lüfterüberwachungseinrichtung LÜB auf. Insgesamt können beispielsweise fünf Lüftervorrichtungen LM/LÜB angeschlossen werden.

Die Schnittstelle NCI für die Netzüberwachung N–ÜB im Unternetzverteiler UNVA ist in gleicher Weise ausgebildet, sie umfaßt aber nur eine Meldeleitung NUE.

Die Schnittstelle MCI umfaßt wenigstens zwei, eine Stromschleife für das anzusteuernde Schütz K2 im zugehörigen Unternetzverteiler UNVA bildende Anschlußleitungen, von denen die eine auf festem Potential, zum Beispiel +12 V, liegt und die andere S–MCI an Gegenpotential schaltbar ist, je nachdem, ob der Schützstromkreis geschlossen oder aufgetrennt werden soll. Zusätzlich ist die Meldeleitung NKF für die Anzeige eines Fehlers durch eine Klimaüberwachungseinrichtung in diese Schnittstelle einbezogen. Alle Meldeleitungen arbeiten auf Empfänger E und für die Steuerleitungen sind entsprechend Sender S vorgesehen.

Alle Meldeleitungen F0 bis F4 für die Lüfterüberwachung sind an die Eingänge einer ersten Auswahleinrichtung, zum Beispiel einen Multiplexer MUX1, und alle Meldeleitungen T0 bis T4 für die Temperaturüberwachung sowie die Meldeleitungen NUE und NKF sind an die Eingänge einer zweiten Auswahleinrichtung, zum Beispiel eines Multiplexers MUX2, angeschlossen, wobei die Eingangszuordnung jeweils so getroffen ist, daß die einander zugehörigen Meldeleitungen, zum Beispiel F0 und T0, mit derselben Einstelladresse PSAR auswählbar sind, andererseits aber jede Schnittstelle durch eine eigene Einstelladresse PSAR gekennzeichnet ist. Nicht beschaltete Eingänge liegen dagegen auf festem Potential "0".

Mit der von der Anschlußschnittstelle gelieferten Einstelladresse PSAR kann so in Verbindung mit einem Auswahlsignal PMSEL für die Meldesteuereinrichtung FCM und einem Statuslesebefehl STATRD über das UND-Glied U1 der an den einzelnen Schnittstellen anliegende Fehlermeldestatus gezielt abgefragt und über vorgegebene Leitungen des Datenleitungssystems PSDBUS der Anschlußschnittstelle weitergeleitet werden. Im vorliegenden Fall werden dafür die Leitungen 5 und 6 des insgesamt acht Leitungen umfassenden vorhandenen Datenleitungssystems PSDBUS genutzt, während die nicht benutzten Leitungen beispielsweise auf festes Potential geschaltet werden, was aber nicht angedeutet ist.

In analoger Weise können über eine weitere Auswahleinrichtung, zum Beispiel in Form eines Decoders DEC1, die Rücksetzsteuerleitungen R0 bis R4 und R–NUE für die in den angeschlossenen Überwachungseinrichtungen gesetzten Fehleranzeigen zum Löschen der Fehleranzeigen durch die Einstelladresse PSAR in Verbindung mit dem Auswahlsignal PMSEL für die Meldesteuereinrichtung FCM und einem Einschaltbefehl ON angesteuert werden, so daß gesetzte Fehleranzeigen einzeln rücksetzbar sind. Mit den Rücksetzsteuerleitungen können gleichzeitig bistabile Netzrelais gekoppelt sein, die die zugehörige Stromversorgung wirksam schalten und bei Setzen einer Fehleranzeige automatisch wieder in den Ausgangszustand geschaltet werden, so daß bei einer erstmaligen Ansteuerung der einzelnen Rücksetzsteuerleitungen bei Inbetriebnahme der Datenverarbeitungsanlage zunächst nur die Stromversorgung wirksam geschaltet wird, während bei nachfolgender Ansteuerung nach Setzen einer Fehleranzeige diese zusätzlich zurückgesetzt wird.

Die Einstelladresse PSAR für die Steuerleitung S–MCI der Schnittstelle MCI unterscheidet sich dabei von der für die Meldeleitung NKF, obwohl diese in die Schnittstelle MCI mit einbezogen ist. Im Prinzip aber handelt es sich um zwei getrennte Schnittstellen. Auch erfolgt die Ansteuerung der Steuerleitung S–MCI für das Schütz K2 im Unternetzverteiler UNVA nicht direkt mit einem durch die Befehlsimpulse vorgegebenen Steuerimpuls, sondern über ein ein Dauersignal lieferndes bistabiles Steuerschaltglied, zum Beispiel in Form der Steuerkippstufe SKS, die setz- und rücksetzbar ist, so daß nicht nur eingeschaltet, sondern auch gezielt ausgeschaltet werden kann. Gesetzt wird dieses bistabile Steuerschaltglied SKS über ein vorgeschaltetes ODER-Glied OR5 mit dem entsprechenden Ausgang S–MCI der Auswahleinrichtung DEC1 oder aber durch einen für Prüfzwecke vorgesehenen mechanischen Schalter ONKEY.

In analoger Weise wird über das ODER-Glied OR6 durch den Ausschaltbefehl OFF in Verbindung mit dem Auswahlsignal PMSEL über das UND-Glied U2 oder durch einen mechanische Schalter OFFKEY gezielt zurückgesetzt. Eine adressenabhängige Zuordnung des Ausschaltbefehles OFF wie beim Einschaltbefehl ON ist allerdings nicht notwendig, da der Ausschaltbefehl OFF nur für die Ansteuerung des Unternetzverteilers UNVA genutzt wird.

Durch fortlaufende Abfrage des Fehlermeldestatus der einzelnen Schnittstellen kann also der Serviceprozessor SVP sich ständig über den Zustand der überwachten Einrichtungen informieren und im Fehlerfall reagieren, zum Beispiel durch Abschalten gestörter Stromversorgungseinheiten PSU..., wobei zum Beispiel durch Umschaltungen auf redundante Funktionseinheiten der Anlage gegebenenfalls eine Sicherheitsabschaltung durch das Schütz K2 im Unternetzverteiler UNVA vermieden wird.

Reagiert der Serviceprozessor SVP auf einen gemeldeten Fehler zunächst mit einem Einschaltbefehl ON, um die zugehörige Fehleranzeige zu löschen, dann lassen sich sporadisch auftretende Fehler in einfacher Weise ausscheiden. Ebenso können infolge eines tatsächlichen Fehlers vorübergehend abgeschaltete Anlagenteile nach der Fehlerbehandlung von zentraler Stelle aus wieder zugeschaltet werden.

Da andererseits aber nicht sichergestellt werden kann, daß der Service-Prozessor SVP immer rechtzeitig reagiert oder ein Fehler rechtzeitig behoben werden kann, muß eine automatische Zwangsabschaltung möglich sein. Zu diesem Zweck sind zumindest für die Lüftervorrichtungen individuelle Fehlerspeicherelemente in Form von Kippstufen

KS0 bis KS4 vorgesehen, die bei Auftreten einer Fehleranzeige über die vorgeschalteten ODER-Glieder OR2 durch die Vorderflanken der entsprechenden Empfängersignale F... und T... gesetzt werden und in gesetztem Zustand über das ODER-Glied OR3 eine Zeitüberwachungsschaltung ZG wirksam werden lassen. Diese Zeitüberwachungsschaltung leitet nach Ablauf einer vorgegebenen Zeitspanne, zum Beispiel 10s durch Rücksetzen des bistabilen Steuerschaltgliedes SKS über das ODER-Glied OR6 eine Zwangsabschaltung ein. Die Zeitüberwachungsschaltung kann beispielsweise ein ständig zählbereites Zählglied sein, das eine vorgegebene Anzahl von Zählstufen aufweist und mit Zählimpulsen abgestimmter Frequenz fortlaufend gespeist wird. Solange keine der Fehlerkippstugen KS0 bis KS4 gesetzt ist, ist jedoch der Zählvorgang, beispielsweise durch Festhalten in der Nullstellung mittels eines Rücksetzsignales, gesperrt. Daher wirkt das Ausgangssignal des ODER-Gliedes OR3 über das ODER-Glied OR4 invertiert auf den Rücksetzeingang R der Zeitüberwachungsschaltung ZG.

Damt eine einmal gesetzte Fehlerkippstufe, zum Beispiel KS0, bei einem rechtzeitigen Reagieren des Serviceprozessors SVP auch wieder zurückgesetzt werden kann, ist eine weitere Auswahleinrichtung in Form eines weiteren Decoders DEC2 vorgesehen, der in gleicher Weise wie der Decoder DEC1 mit der Einstelladresse PSAR in Verbindung mit dem Auswahlsignal PMSEL und einem gesonderten Rücksetzbefehl RESDCBR angesteuert wird und die individuellen Rücksetzsignale RESFAIL0 bis RESFAIL4 auslöst, die über die ODER-Glieder OR1 auf die zugehörigen Kippstufen einwirken und diese zurücksetzen. Gleichzeitig stellen die Signale PMSEL und RESDCBR über das UND-Glied U3 und das ODER-Glied OR4 die Zeitüberwachungsschaltung ZG zurück, so daß eine Zwangsabschaltung bei rechtzeitigem Reagieren des Serviceprozessors auf eine Fehleranzeige unterbleibt.

Damit eine bei rechtzeitigem Reagieren des Serviceprozessors SVP zurückgesetzte Fehlerkippstufe nicht erneut gesetzt wird, wenn die zugehörige Fehleranzeige nicht zurückgesetzt werden konnte und das Fehlersignal fortbesteht, weil der Serviceprozessor zwar auf die Fehlermeldung mit einer Ersatzschaltung reagiert hat, aber der eigentliche Fehler noch nicht behoben werden konnte, erfolgt das Setzen der Kippstufen jeweils mit der Vorderflanke eines Fehlersignals.

Außerdem wird mit den individuellen Rücksetzsignalen für die einzelnen Fehlerkippstufen KS0 bis KS4 sichergestellt, daß bei sich überlappenden Fehleranzeigen und zeitgerechter Reaktion auf eine der Fehleranzeigen die übrigen Fehleranzeigen nicht unterdrückt werden. Nicht zurückgesetzte Fehlerkippstufen bleiben daher vorerst gesetzt und lassen nach Abklingen des Rücksetzbefehles RESDCBR die Zeitüberwachungsschaltung ZG erneut an.

Der schaltungstechnische Aufwand für die gezeigte Meldesteuereinrichtung FCM ist verhältnismäßig gering. Auch ergeben sich durch die Meldesteuereinrichtung keine Rückwirkungen auf die Anschlußschnittstelle zum Serviceprozessor, wenn die bereits vorhandenen Schnittstellenbefehle und die vorhandenen Adressen- und Datenleitungen der Anschlußschnittstelle für die Steuerung genutzt werden. Darüber hinaus besteht wie für die Steuereinrichtung PSM auch für die Meldesteuereinrichtung FCM die Möglichkeit der direkten Abschaltung mit PSCRES von der Stromversorgungseinrichtung SVP–SV des Service-Prozessors SVP aus, wenn die Stromversorgungseinheit SVP–SV einmal ausfallen sollte, wobei gesetzte Fehlerkippstufen KS0 bis KS4 über das ODER-Glied OR1 ebenfalls zurückgesetzt werden.

Die gezeigte Lösung mit einer eigenständigen Meldesteuereinrichtung FCM läßt auch in einfacher Weise eine modulhafte Erweiterung zu, wenn die Anzahl der zu einer Anlage zusammengefaßten Baueinheiten zum Beispiel mehr als die in einer Meldesteuereinrichtung FCM vorgesehene Anzahl von Schnittstellen FCI erfordert. Alle Meldesteuereinrichtungen werden dann parallel an die Anschlußschnittstelle SVP–BUS angeschlossen und über zwei zusätzliche Steuerleitungen OFFCASIN und OFFCASOUT kaskadenförmig in der Weise zusammengeschaltet, daß eine ansprechende Zeitüberwachungsschaltung ZG in einer der Meldesteuereinrichtungen FCM über den Ausgang OFFCASOUT am Ausgang der Zeitüberwachungsschaltung auf die ODER-Glieder OR6 aller übrigen Meldesteuereinrichtungen FCM am Eingang OFFCASIN einwirken können, so daß die Abschaltung bei allen Meldesteuereinrichtungen wirksam werden kann.

In FIG 1 trägt einer derartigen modulartigen Erweiterung der Anlage der im Unternetzverteiler UNVA vorgesehene Folgesicherungsschalter FS Rechnung, der den Anschluß eines weiteren Unternetzverteilers für einen weiteren nicht gezeigten Anlagenteil ermöglicht.

**Patentansprüche**

1. Datenverarbeitungsanlage, deren einzelnen Funktionseinheiten zusammen mit den jeweils benötigten Stromversorgungseinheiten (PSU...) und Lüftervorrichtungen (LM...) in Baueinheiten, zum Beispiel Rahmen (R0 bis Rn), zusammengefaßt sind, wobei mit den Lüftervorrichtungen, (zum Beispiel LM0) Überwachungseinrichtungen (LÜB) zur Feststellung von Lüfter- und Temperaturfehlern (Fx bzw. Tx) und Steuereinrichtungen zur Meldung festgestellter Fehler an eine zentrale Serviceeinrichtung, zum Beispiel Serviceprozessor (SVP) mit Bedienungsplatz, gekoppelt sind, dadurch gekennzeichnet, daß wenigstens eine über die vorhandene Anschlußschnittstelle (SVP-BUS) für die Serviceeinrichtung (SVP) ansteuerbare eigenständige Meldesteuereinrichtung (FCM) mit auswählbaren individuellen Melde- und Steuerleitungen (F...,T... bzw. R...) für die einzelnen Überwachungseinrichtungen (LÜB) vorgesehen ist, daß die Meldesteuereinrichtung (FCM) über die Anschlußschnittstelle (SVP-BUS) ansteuerbare Auswahleinrichtungen (MUX1, MUX2 bzw. DEC1) zur Abfrage der Meldeleitungen (F.., T...) von den einzelnen Lüftervorrichtungen (LM0 bis LMn) auf das Vorliegen von angesprochenen Fehleranzeigen und zur Ansteuerung der Steuerleitungen (R...) zu den einzelnen Lüftervorrichtungen zwecks Rücksetzen einer angesprochenen Fehleranzeige aufweist und daß in der Meldesteuereinrichtung (FCM) den Lüftervorrichtungen (LM0 bis LMn) individuell zugeordnete Fehlerspeicherelemente (z.B. KS0 bis KS4) vorgesehen sind, die einen von den einzelnen Lüftervorrichtungen gemeldeten Fehler (über F... und/oder T...) unmittelbar speichern und demzufolge eine Zeitüberwachungsschaltung (ZG) wirksam schalten, die nach Ablauf einer vorgegebenen Zeitspanne (z.B. 10s) eine Netzabschaltung für die überwachten Baueinheiten veranlaßt.

2. Datenverarbeitungsanlage nach Anspruch 1, dadurch gekennzeichnet, daß mit den Rücksetzleitungen (R...) für die Fehleranzeigen Netzrelais der Lüftervorrichtungen (z.B. LM0) gekoppelt sind, über die die Lüftervorrichtung in Betrieb setzbar ist, wenn die zugehörige Fehleranzeige nicht wirksam ist.

3. Datenverarbeitungsanlage nach Anspruch 1 oder 2, dadurch gekennzeichnet, daß neben den Melde- und Steuerleitungen (F..., T..., R...) für die Lüftervorrichtungen (z.B. LM0 bis LMn) weitere Melde- und/oder Steuerleitungen (z.B. NUE, NKF bzw. R–NUE, S–MCI) für weitere Überwachungseinrichtungen (z.B. Netzüberwachung N–ÜB, Klimaüberwachung K–ÜB, Schütz K2 des Unternetzverteilers UNVA) vorgesehen sind und daß über eine der weiteren Steuerleitungen (S-MCI) die Netzstromversorgung für den überwachten Anlagenteil (z.B. Rahmen R0 bis Rn) unmittelbar ein- und ausschaltbar ist.

4. Datenverarbeitungsanlage nach Anspruch 3, dadurch gekennzeichnet, daß die Steuerleitung (S–MCI) für den Unternetzverteiler (UNVA) mit dem Steuerausgang eines bistabilen Steuerschaltgliedes (SKS) verbunden ist, das von der übergeordneten Serviceeinrichtung (SVP) aus über eine der Auswahleinrichtungen (DEC1) in einen die Netzstromversorgung bewirkenden Schaltzustand und durch direkte Ansteuerung (mit OFF) in einen die Netzstromversorgung unterbrechenden Schaltzustand schaltbar ist.

5. Datenverarbeitungsanlage nach Anspruch 4, dadurch gekennzeichnet, daß der Ausgang der Zeitüberwachungsschaltung (ZG) bei seinem Wirksamwerden das bistabile Steuerschaltglied (SKS) ebenfalls in den die Netzstromversorgung unterbrechenden Schaltzustand schaltet, wenn die übergeordnete Serviceeinrichtung (SVP) auf einen angezeigten Fehler nicht rechtzeitig reagiert und den zwischengespeicherten Fehler wieder löscht sowie die Zeitüberwachungsschaltung (ZG) zurücksetzt, und daß zum gezielten Löschen der einzelnen Fehlerspeicherelemente (KS0 bis KS4) eine weitere über die Anschlußschnittstelle (SVP–BUS) ansteuerbare Auswahleinrichtung (DEC2) vorgesehen ist.

6. Datenverarbeitungsanlage nach Anspruch 4 oder 5, dadurch gekennzeichnet, daß mehrere Meldesteuereinrichtungen (FCM...) vorgesehen sind, die einzeln für sich über die gemeinsame Anschlußschnittstelle (SVP–BUS) ansteuerbar sind und daß die Ausgänge der Zeitüberwachungsschaltung (ZG...) jeder Meldesteuereinrichtung (FCM...) mit den Rücksetzeingängen der bistabilen Steuerschaltglieder (SKS) der übrigen Meldesteuereinrichtungen (FCM...) gekoppelt (OFFCASOUT) sind, so daß bei Ansprechen einer der Zeitüberwachungsschaltungen (ZG) alle parallel arbeitenden Unternetzverteiler (UNVA) der Datenverarbeitungsanlage abgeschaltet werden.

## Claims

1. Data processing apparatus, the individual functional units of which are combined together with the respective power supply units (PSU...) and ventilation devices (LM...) required in assemblies, for example racks (R0 to Rn), monitoring devices (LÜB) for detecting ventilator and temperature faults (Fx and Tx respectively) and control devices for reporting faults detected to a central service device, for example service processor (SVP) with operator console, being coupled to the ventilation devices (for example LM0), characterized in that there is provided at least one independent alarm control device (FCM) which is controllable for the service device (SVP) via the existing terminal interface (SVP–BUS) and which has selectable individual alarm lines and control lines (F..., T... and R... respectively) for the individual monitoring devices (LÜB), in that the alarm control device (FCM) has selection devices (MUX1, MUX2 and DEC1 respectively) control label via the terminal interface (SVP–BUS) for polling the alarm lines (F.., T...) of the individual ventilation devices (LM0 to LMn) with regard to the presence of activated fault indications and for controlling the control lines (R...) to the individual ventilation devices for the purpose of resetting an activated fault indication, and in that there are provided in the alarm control device (FCM) fault memory elements (e.g. KS0 to KS4) individually assigned to the ventilation devices (LM0 to LMn), which fault memory elements directly store a fault reported by the individual ventilation devices (via F... and/or T...) and accordingly activate a time watchdog circuit (ZG) which causes the power to be switched off for the monitored assemblies after expiry of a predetermined time (e.g. 10 s).

2. Data processing apparatus according to Claim 1, characterized in that there are coupled to the reset lines (R...) for the fault indications mains relays via which the ventilation device can be operated when the associated fault indication is not activated.

3. Data processing apparatus according to Claim 1 or 2, characterized in that, besides the alarm lines and control lines (F..., T..., R...,) for the ventilation devices (e.g. LM0 to LMn), further alarm lines and/or control lines (e.g. NUE, NKF and R–NUE, S–MCI respectively) for further monitoring devices (e.g. mains monitor N–ÜB, climate monitor K–ÜB contactor K2 of the power sub-distributor UNVA) are provided, and in that the mains power supply for the monitored part of the system (e.g. racks R0 to Rn) can be switched on and off directly via one of the further control lines (S–MCI).

4. Data processing apparatus according to Claim 3, characterized in that the control line (S–MCI) for the power sub-distributor (UNVA) is connected to the control output of a bistable control switching element (SKS) which can be switched by the superordinate service device (SVP) via one of the selection devices (DEC1) into a switching state activating the mains power supply, and by direct control (with OFF) into a switching state interrupting the mains power supply.

5. Data processing apparatus according to Claim 4, characterized in that, when activated, the output of the time watchdog circuit (ZG) likewise switches the bistable control switching element (SKS) to the switching state interrupting the mains power supply when the superordinate service device (SVP) does not react in time to a fault indicated, and clears the temporarily stored fault again and resets the time watchdog circuit (ZG), and in that a further selection device (DEC2) controllable via the terminal interface (SVP–BUS) is provided for the selective clearing of the individual fault memory elements (KS0 to KS4).

6. Data processing apparatus according to Claim 4 or 5, characterized in that a plurality of alarm control devices (FCM...) are provided, each of which are independently controllable via the common terminal interface (SVP–BUS), and in that the outputs of the time watchdog circuit (ZG..) of each alarm control device (FCM...) are coupled to the reset inputs of the bistable control switching elements (SKS) of the remaining alarm control devices (FCM...) so that all parallel functioning power sub-distributors (UNVA) of the data processing apparatus are switched off when one of the time watchdog circuits (ZG) is activated.

## Revendications

1. Installation de traitement de données, dont les différentes unités fonctionnelles sont rassemblées, conjointement avec des unités respectives nécessaires d'alimentation en courant (PSU...) et des dispositifs formant ventilateurs (LM...) dans des modules, par exemple des cadres (R0 à Rn), et dans laquelle des dispositifs de contrôle (LÜB) servant à détecter des défauts des ventilateurs et des températures erronées (Fx ou Tx) et des dispositifs de commande servant à signaler des défauts détectés à un dispositif central de service, par exemple un processeur de service (SVP) comportant un poste de commande, sont accouplés aux dispositifs formant ventilateurs (par exemple LM0), caractérisée par le fait qu'au moins un dispositif indépendant de commande de signalisation (FCM), qui peut être commandé par l'intermédiaire de l'interface de raccordement existante (SVP–BUS) pour le dispositif de service (SVP) comporte des lignes individuelles de signalisation et de commande (F..., T... ou R...), pouvant être sélectionnées, pour les différents dispositifs de contrôle (LÜB), que le dispositif de commande de signalisation (FCM) comporte des dispositifs de sélection (MUX1, MUX2 ou DEC1) pouvant être commandés par l'intermédiaire de l'interface de raccordement (SVP–BUS) et servant à interroger les lignes de signalisation (F...,T...) des différents dispositifs formant ventilateurs (LM0 à LMn), pour

détecter la présence de dispositifs d'indication de défauts, ayant répondu, et pour commander les lignes de commande (R...) aboutissant aux différents dispositifs formant ventilateurs, en vur de remettre à zéro un dispositif d'indication de défaut, qui a répondu, et que dans le dispositif de commande de signalisation (FCM) se trouvent prévus des éléments de mémoire de défauts (par exemple KS0 à KS4), qui sont associés individuellement aux dispositifs formant ventilateurs (LM0 à LMn), mémorisent directement (par l'intermédiaire de F... et/ou T...) l'un des défauts signalés par les différents dispositifs formant ventilateurs et branchent par conséquent à l'état actif un circuit de contrôle à temporisation (ZG), qui, après l'écoulement d'un intervalle de temps prédéterminé (par exemple 10 s), déclenche un débranchement de réseau pour les modules contrôles.

2. Installation de traitement de données suivant la revendication 1, caractérisée par le fait qu'aux lignes de remise à zéro (R...) pour les dispositifs d'affichage de défauts sont accouplés des relais de raccordement au réseau des dispositifs formant ventilateurs (par exemple LM0), par l'intermédiaire desquels le dispositif formant ventilateur peut être mis en marche, lorsque le dispositif associé d'affichage de défauts n'est pas actif.

3. Installation de traitement de données suivant la revendication 1 ou 2, caractérisée par le fait qu'en-dehors des lignes de signalisation et de commande (F..., T..., R...) prévues pour les dispositifs formant entilateurs (par exsemple LMO à LMn), il est prévu d'autres lignes de signalisation et/ou de commande (par exemple NUE, NKF ou R–NUE, S–MCI) utilisées pour d'autres dispositifs de contrôle (par exemple le dispositif N–ÜB de contrôle du réseau, le dispositif K–ÜB de contrôle de la climatisation, le contacteur K2 du réparatiteur secondaire UNVA du réseau) et que le dispositif d'alimentation en courant du réseau, prévu pour la partie contrôlée de l'installation (par exemple les cadres R0 à Rn) peut être branché et débranché directement par l'intermédiaire de l'une des autres lignes de commande (S–MCI).

4. Installation de traitement de données suivant la revendication 3, caractérisée par le fait que la ligne de commande (S–MCI) prévue pour le dispositif de répartition secondaire (UNVA) du réseau est reliée à la sortie de commande d'un circuit de commande bistable (SKS), qui peut être amené, à partir du dispositif de service (SVP) de rang supérieur et par l'intermédiaire de l'un des dispositifs de sélection (DEC1), dans un état de commutation réalisant l'alimentation en courant du réseau, et, au moyen d'une commande directe (avec OFF), dans un état de commutation interrompant l'alimentation en courant du réseau.

5. Installation de traitement de données suivant la revendication 4, caractérisée par le fait que, lorsque le circuit de contrôle à temporisation (ZG) passe à l'état actif, sa sortie commute également le circuit de commande bistable (SKS) dans l'état de commutation interrompant l'alimentation en courant du réseau, lorsque le dispositif de service (SVP) de rang supérieur ne réagit pas en temps opportun à un défaut indiqué, efface à nouveau le défaut mémorisé temporairement et ramène à zéro le circuit de contrôl à temporisation (ZG), et que pour obtenir l'effacement recherché des différents éléments (KS0 à KS4) de la mémoire de défauts, il est prévu un autre dispositif de sélection (DSC) pouvant être commandé par l'intermédiaire de l'interface de raccordement (SVP–BUS).

6. Installation de traitement de données suivant la revendication 4 ou 5, caractérisée par le fait qu'il est prévu plusieurs dispositifs de commande de signalisation (FCM...), qui peuvent être commutés chacun pour soi par l'intermédiaire de l'interface commune de raccordement (SVP–BUS) et que les sorties du circuit de contrôle à temporisation (ZG...) de chaque dispositif de commande de signalisation (FCM...) sont accouplées (OFFCASOUT) aux entrées de remise à l'état initial du circuit de commande bistables (SKS) des autres dispositifs de commande de signalisation (FCM...), de sorte que, lors de la réponse de l'un des circuits de contrôle à temporisation (ZG), tous les dispositifs secondaires de répartition (UNVA) du réseau de l'installation de traitement de données, qui travaillent en parallèle, sont débranchés.

# FIG 1

EP 0 191 937 B1

FIG 2

EP 0 191 937 B1